(19) Europäisches Patentamt
European Patent Office
Office européen des brevets

(11) Publication number: 0 382 409 A2

(12) EUROPEAN PATENT APPLICATION

(21) Application number: 90301059.3

(22) Date of filing: 01.02.90

(51) Int. Cl.5: C08L 81/02, C08K 7/14

(30) Priority: 07.02.89 US 306931

(43) Date of publication of application: 16.08.90 Bulletin 90/33

(84) Designated Contracting States: AT BE CH DE DK ES FR GB GR IT LI LU NL SE

(71) Applicant: HOECHST CELANESE CORPORATION
Route 202-206 North
Somerville, New Jersey(US)

(72) Inventor: Sell, Joseph W.
684 Heritage Road
Millington, New Jersey(US)

(74) Representative: De Minvielle-Devaux, Ian Benedict Peter et al
CARPMAELS & RANSFORD 43, Bloomsbury Square
London WC1A 2RA(GB)

(54) **Low warp glass-filled polyarylene sulfide compositions.**

(57) Glass filled polyarylene sulfide compositions are modified by the addition of polyether sulfone to reduce shrinkage and warpage in articles molded therefrom.

EP 0 382 409 A2

# LOW WARP GLASS-FILLED POLYARYLENE SULFIDE COMPOSITIONS

## BACKGROUND OF THE INVENTION

This invention relates to glass fiber-reinforced polyarylene sulfide resin compositions.

Polyarylene sulfide resins are attracting attention as high-performance engineering plastics having higher heat resistance, chemical resistance and rigidity than usual engineering plastics such as polycarbonate, polyacetal, nylon and polybutylene terephthalate. It is known that inclusion of a fibrous reinforcing material such as glass fibers into polyarylene sulfide leads to a striking improvement in the properties necessary for use as engineering plastics, such as strength, rigidity, toughness, heat resistance and dimensional stability. It is also known that with a glass fiber-reinforced polyarylene sulfide resin composition, the strength and rigidity increases generally with increasing amount of the glass fibers incorporated therein. Accordingly, when increased strength and rigidity are desired, it is the general practice to increase the amount of the glass fibers incorporated into the resin composition.

A relatively recent development has been the use of polyarylene sulfide compositions such as, for example, polyphenylene sulfide compositions, for molding electronic components and as encapsulating materials for electronic components. These compositions typically comprise glass fiber reinforced polyarylene sulfide. Electronic components are molded or otherwise encapsulated to maintain electrical insulation, to provide mechanical protection and to otherwise shield the metallic components from exposure to the environment. As the evolution of electronics continues its rapid advance, it becomes increasingly important that the art and technology of molding and encapsulation keep pace.

Many electronic components are encased in or supported on thin molded bodies. Unfortunately, articles molded from glass fiber-reinforced polyarylene sulfide tend to shrink and warp. In applications where flatness of the molded article is critical, such as where the molded article is a thin electronic component, increasing the amount of glass fibers in the polyarylene sulfide to increase strength is disadvantageous with respect to the surface properties of the molded article.

One prior effort to reduce shrinkage and warpage of molded articles formed from glass reinforced polyarylene sulfide is disclosed in U.S. 4,365,037 wherein glass fibers having a specified diameter are used as the reinforcing material and a specified mica powder is added with the glass fibers to reduce deformation and shrinkage of molded articles obtained from the polyarylene sulfide resin composition.

The present invention is an attempt to reduce the shrinkage and warpage of glass reinforced polyarylene sulfide articles without reducing the advantageous mechanical properties inherent in the filled polyarylene sulfide. An area of significant concern and interest addressed by the present invention relates specifically to polyarylene sulfide compositions used to make molded electronic parts and to encapsulate electronic components.

## SUMMARY OF THE INVENTION

In accordance with the present invention, a glass reinforced polyarylene sulfide composition is provided which comprises (a) 40-50 wt.% of the total composition of polyarylene sulfide, (b) 30-50 wt.% of the total composition of glass fiber and (c) 10-20 wt.% of a polyether sulfone based on the total composition. It has been found that by incorporating polyether sulfone into glass reinforced polyarylene sulfide compositions, there is achieved reduced shrinkage and warpage of articles molded therefrom and at the same time the disclosed amount of polyether sulfone addition does not adversely affect the good mechanical properties and heat deflection temperature of glass reinforced polyarylene sulfide.

## DETAILED DESCRIPTION OF THE INVENTION

Uncured or partially cured polyarylene sulfide polymers whether homopolymer, copolymer, terepolymer, and the like, or a blend of such polymers, can be used in the practice of this invention. The uncured or partially cured polymer is a polymer the molecular weight of which can be increased by either lengthening of a molecular chain or by crosslinking or by combination of both by supplying thereto

sufficient energy, such as heat. Suitable polyarylene sulfide polymers include, but are not limited to, those described in U.S. Pat. No. 3,354,129, incorporated by reference herein.

Some examples of polyarylene sulfide compositions suitable for the purposes of this invention include poly(2,4-tolylene sulfide), poly(4,4′-biphenylene sulfide) and polyphenylene sulfide. Because of its availability and desirable properties such as high chemical resistance, nonflammability, and high strength and hardness polyphenylene sulfide is the presently preferred polyarylene sulfide. The polyarylene sulfide composition may be a mixture of more than one polyarylene sulfide.

Particularly preferred polyarylene sulfides for use in this invention are disclosed in U.S. 4,645,826, the entire content of which is herein incorporated by reference. As disclosed therein a linear PAS of a markedly high molecular weight with a melt viscosity of about some thousands to some tens of thousands poise can be readily produced without the use of an aid by forming a PAS prepolymer of low to medium molecular weight according to a preliminary polymerization, then elevating the temperature by heating the polymerization system under strongly alkaline conditions with addition of a phase separating agent to the polymerization system, thereby separating the system into two liquid phases of high viscosity phase (polymer solution phase) and low viscosity phase (solvent phase), and carrying out the reaction under such a state.

The two-phase separated polymerization comprises dissolving an arylenesulfide prepolymer having a melt viscosity of 5 to 3,000 poise (at 310 °C, shearing rate = 200 $(sec)^{-1}$) in a poor solvent, i.e. water, under a strongly alkaline condition (in a pH range of from 9.5 to 14 of the reaction mixture when diluted 10-fold with water) in a temperature range of from 245 °C to 290 °C into a liquid-liquid two-phase separated state and maintaining this state for 1 to 50 hours to convert the arylenesulfide prepolymer into a high molecular weight polymer, then separating the polymer from the polymerization system and purifying the polymer after neutralization.

The process for production of a high to ultra-high molecular weight PAS according to U.S. 4,645,826 comprises, basically, forming PAS molecules through bonding between an alkali metal sulfide and a dihalo-aromatic compound and/or converting the PAS molecules into a high molecular weight polymer. PPS having melt viscosities of at least 3,000 poise can be produced by the process as disclosed therein including PPS having melt viscosities of at least 7,000 poise and much higher.

The starting materials for producing the prepolymer comprise an alkali metal sulfide, a dihalo-aromatic compound and a polymerization solvent. The alkali metal sulfide used includes lithium sulfide, sodium sulfide, potassium sulfide, rubidium sulfide, cesium sulfide and mixtures thereof. These alkali metal sulfides can be used as hydrates or aqueous mixtures, or in anhydrous forms. Among these alkali sulfides, sodium sulfide is the least expensive and is commercially preferred. It is also possible to use a small amount of an alkali metal hydroxide in combination in order to neutralize an acidic salt (e.g., alkali metal disulfides and alkali bicarbonates) which may sometimes occur in minute amount in an alkali metal sulfide.

The dihalo-aromatic compound used includes any of dihalo-aromatic compounds as disclosed in Japanese Laid-open Patent Publication No. 22926/1984. Particularly preferred are p-dichlorobenzene, m-dichlorobenzene, 2,5-dichlorotoluene, 2,5-dichloro-p-xylene, p-dibromobenzene, 1,4-dichloronaphthalene, 1-methoxy-2,5-dichlorobenzene, 4,4′-dichlorobiphenyl, 3,5-dichlorobenzoic acid, p,p′-dichlorodiphenylether, p,p′-dichlorodiphenylsulfone, p,p′-dichlorodiphenylsulfoxide, p,p′-dichlorodiphenylketone, and the like. Among these, those composed mainly of para-dihalobenzene, typically p-dichlorobenzene, are especially preferred.

By appropriate selection and combination of dihalo-aromatic compounds, a random or block copolymer containing two or more different reaction units can be obtained. For example, when employing p-dichlorobenzene in combination with m-dichlorobenzene or p,p′dichlorodiphenylsulfone, a random or block copolymer containing:

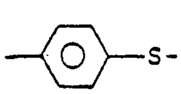 units and, 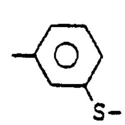 units or

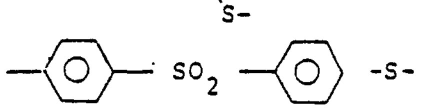 units.

can be obtained. Further, a small amount of a polyhaloaromatic compound (e.g., trichlorobenzene) within the range which may provide some cross-linking but not substantially impair linearity may also be employed in combination, but no such compound is ordinarily required.

The organic amide solvent used in the polymerization step for forming the prepolymer can be selected

from N-methylpyrrolidone (NMP), N-ethyl-pyrrolidone, N,N-dimethylformamide, N,N-dimethylacetamide, N-methylcaprolactam, tetramethylurea, hexamethylphosphorotriamide, and mixtures thereof. Among these, N-methylpyrrolidone is particularly preferred from viewpoints such as chemical stability and ability to produce readily a high molecular weight polymer. The organic amide as the polymerization solvent is desirably an aprotic compound. In the polymerization step for forming an ultra-high molecular linear polymer from the prepolymer, the above organic amide can of course be used. Otherwise, it is also possible to employ, for example, aromatic hydrocarbons ($C_6$-$C_{30}$), aliphatic hydrocarbons ($C_6$-$C_{30}$), ethers ($C_6$-$C_{30}$), ketones ($C_5$-$C_{30}$), pyridine or quinoline or derivatives of these ($C_5$-$C_{30}$), and mixtures thereof as such or as mixtures with organic amides.

In practicing the process, first, an alkali metal sulfide and a dihalo-aromatic compound are added into an organic solvent, desirably under an inert gas atmosphere, and the temperature is elevated to a desired temperature at which the reaction is carried out. Here, if the water content in the alkali metal sulfide is less than the desired content, the necessary amount of water is added for supplementation.

The preliminary polymerization is preferably conducted at a temperature in the range of from 160° to 260° C, particularly from 180° to 235° C. At a temperature lower than 160° C, the reaction rate is too slow, while at a temperature over 260° C, the PAS formed is liable to be decomposed to produce only a PAS with extremely low melt viscosity.

The end point of the preliminary polymerization step and the timing of turning from the preliminary polymerization to the two-phase separated polymerization, is preferably the point when the conversion of the dihalo-aromatic compound has reached 70 mole % to 98 mole %.

At the point of turning from the preliminary polymerization to the two-phase separated polymerization, the melt viscosity of the PAS is preferably in the range of from 5 to 300 poise. The range of from 10 poise to 200 poise is more suited for obtaining a PAS of a high polymerization degree with a melt viscosity of 1,000 poise or higher. With a viscosity less than 5 poise, formation of two-phase separation is insufficient, whereby decomposition of the polymerization system or lowering of the reaction rate will readily occur. With a viscosity over 300 poise, harmful substances which will promote polymer cleavage will be accumulated in greater amount, whereby lowering in polymer yield and decomposition of the polymer system will undesirably be caused.

The polymerization process as described in U.S. 4,645,826 is applicable for not only homopolymerization or random copolymerization but also for block copolymerization. For example, a purified p-phenylene prepolymer and a purified m-phenylene prepolymer can be dispersed in the same polymerization vessel to carry out the two-phase separated polymerization step, whereby a (p-phenylenesulfide)-(m-phenylenesulfide) block copolymer can readily be obtained.

The polysulfones which are useful in this invention for reducing warpage of the glass fiber reinforced polyarylene sulfide are polyarylene compounds in which the arylene units are positioned together with ether and sulfone linkages. Examples include those having the following structural units 1 to 16. In these structural formulas, n represents an integer of 10 or more. The useful polyether sulfones will be melt processable in the temperature range of the melting point of the polyarylene sulfide which is used.

(1) 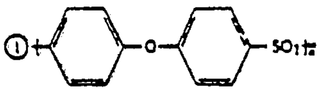

(2) 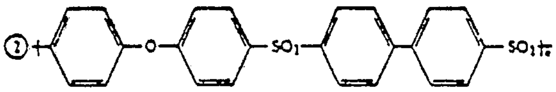

(3) 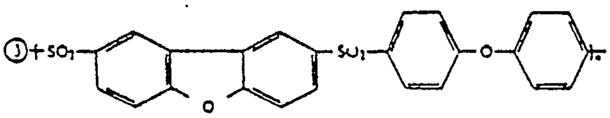

(4) 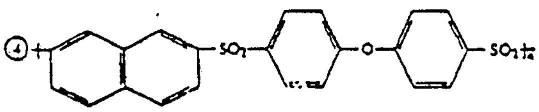

(5) 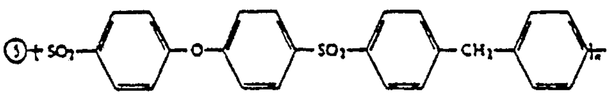

(6) 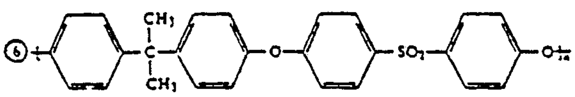

(7) 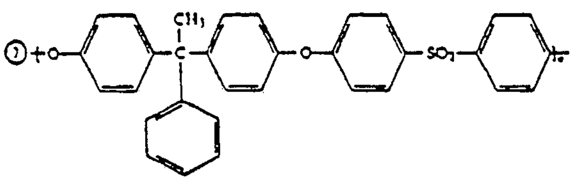

(8) 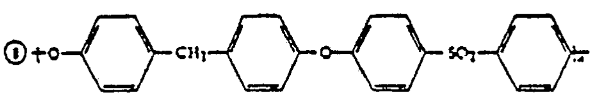

(9) 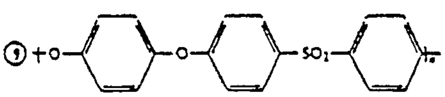

(10) 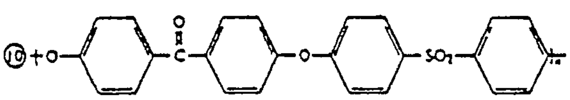

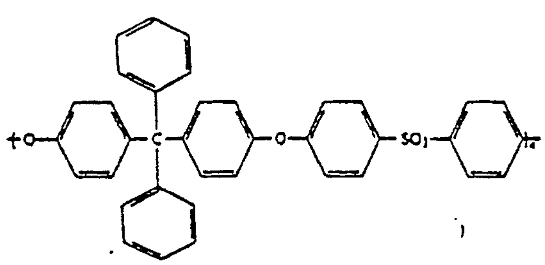

(12) 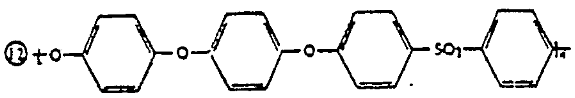

(13) 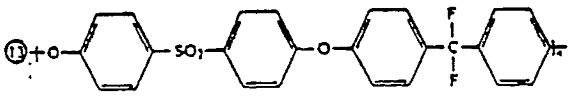

(14) 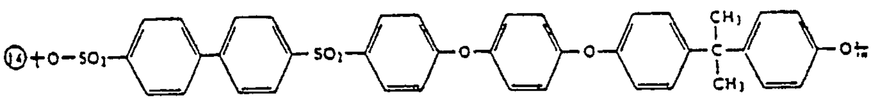

(15) 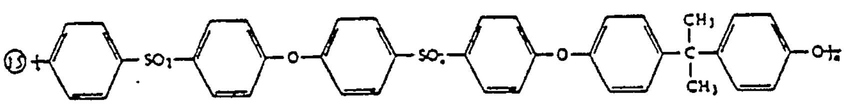

(16) 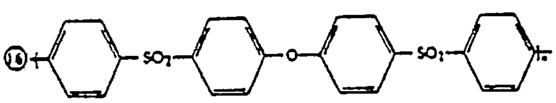

The glass fiber which can be used includes any commercially available glass fibers.

It has been found that a composition containing (a) 40-50 wt.% of polyarylene sulfide (PAS), (b) 30-50 wt.% of glass fibers and (c) 10-20 wt.% of a polyether sulfone (PES) (all percentages based on the total of (a), (b) and (c)) yields molded articles of greatly reduced warpage than glass reinforced polyphenylene sulfide without the polyether sulfone addition. Also, the improved warpage is not at the expense of a degradation in mechanical properties of the composition as the strength, flexibility and heat deflection temperature of the glass reinforced polyarylene sulfide are maintained. Thus, glass reinforced polyarylene sulfide can now be used in applications where the flatness of the molded article is critical such as molded or encapsulated electronic components. A preferred composition comprises (a) 50 wt.% of polyarylene sulfide, (b) 40 wt.% of glass fibers and (c) 10wt.% of a polyether sulfone. When less than 10wt.% of the polyether sulfone is added to the glass-reinforced PAS composition, negligible improvement in warpage is found. On the other hand, it has been found very difficult to properly mix and mold glass-reinforced PAS compositions which contain amounts of polyether sulfone substantially greater than 20 wt.%. Thus, it has been found that greater amounts of polyether sulfone require higher temperatures, even temperatures which tend to cause excessive cross-linking of the PAS. Also, it has been found that increasing the PES content reduces the heat deflection temperature of the composition.

As is usual in polymeric blends based on polyarylene sulfide, a variety of other additives can be used in minor amounts of up to about 5% by weight of the total composition. These additives include such materials as flow improving agents, silanes and pigments.

Processability agents that can be employed in the inventive composition can be selected from among solid ethylene polymers (see U.S. Pat. No. 4,134,874), saturated fatty acids such as zinc stearate and the N,N′-alkylene bis(alkanamides), glycerides and phosphated glycerides of saturated fatty acids containing from 10 to 30 carbon atoms, mono- and dialkanolamides derived from saturated acids and esters derived from a saturated long-chain fatty acid and long-chain saturated aliphatic alcohol. General fillers such as lithium carbonate are also suitable as processability agents.

The polyarylene sulfide resin composition of the present invention can be prepared, for example, by mixing predetermined amounts of the polyarylene sulfide resin, preferably dried, the glass fibers and the polyether sulfone by means of a usual mixer, for example, a tumble mixer; by melt-kneading the mixture by means of an extruder or kneader, and, if necessary, by pelletizing the melt-kneaded mixture.

Once made, the compositions of the present invention can be used to make molded articles in accordance with any method suitable and known in the art. Compositions of the present invention are especially suited for injection molding wherein the composition is introduced into an injection molding apparatus to produce a melt which is extruded into an injection mold which conforms to the part to be molded.

The improved polyarylene sulfide compositions of this invention can be used to make electronic components such as, but certainly not limited to, connectors, bobbins, coils, relays, etc. This aspect of the invention includes all electronic components that can be at least partially made from a resinous composition such as a polyarylene sulfide composition.

In accordance with another aspect of this invention, electronic components can be encapsulated with the polyarylene sulfide composition of this invention. The electronic components to be encapsulated in accordance with this aspect of the invention broadly includes all electronic components, i.e. devices, parts, etc., for which encapsulation is desired. Many electronic components have been manufactured or encapsulated with polyarylene sulfide compositions or have been suggested as being capable of made or encapsulated with polyarylene sulfide compositions, and this invention is not intended to be narrow in scope to any specific components mentioned, but include any and all electronic components which can be manufactured from polyarylene sulfide molding compositions.

The following example is intended to illustrate the invention only and should not be interpreted to unduly limit the scope of the invention.

## EXAMPLE I

This example illustrates the effectiveness of polyether sulfone to reduce warpage of glass filled polyphenylene sulfide compositions. Also, measured were the effects on mechanical properties, heat deflection temperature and glass transition temperature.

All compositions were compounded on a 28 mm ZSK extruder with varying levels of glass fiber, mica and polyether sulfone. The PES was the polyphenylether sulfone depicted in structural formula 1 shown previously. The non PES containing compositions were compounded at temperatures ranging from 305-330 °C while the compositions containing PES were compounded at temperatures of 390-400 °C. The materials were pelleted and dried for at least 8 hours at 170 °F in a dehumidifying oven prior to molding. All the compositions were injection molded on a 7.8 ounce Battenfeld with a Mega No. 2 mold. The mold temperature was 290 °F for all compositions and injection pressure ranged from about 5,000 psig to 9,500 psig for each sample. Nozzle temperature for the non PES-containing samples was 600 °F while samples containing PES required a nozzle temperature of 700 °F. The compositions and the physical properties of the molded test samples are shown in Table 1.

Samples B and F which are blends comprising 30 wt.% each of the polyphenylene sulfide and polyether sulfone could not be successfully compounded as the melt froze in the die with the die temperature set at 700 °F. It is believed that the addition of the inorganic filler is one reason why such composition could not be uniformly compounded. It is also believed that at the high die temperature needed for melting, that excessive cross-linking of the PPS took place. The 40% GF PPS control (A) had strength properties about 15% below the published values for commercial product. From the data, the replacement of the fiber glass with mica or a third of the PPS with PES had the effect of reducing warpage (C, D, E). Lowering of the heat deflection temperature resulted when 40% mica or 20% PES were incorporated into the formulation. However, reduction in warpage was seen at 10% PES incorporation without a reduction in heat deflection temperature. The use of PES did not reduce the strength, stiffness or impact properties like the incorporation of mica did.

Dynamic mechanical thermal analysis (DMTA) was used to determine the glass transition temperatures of the samples with the data reported in Table II. All of the materials showed the characteristic Tg of PPS at about 115 °C. However, samples C and D which contained PES had a Tg of about 205 °C which is significantly lower than the 222 °C Tg measured for a 75% PPS/25% PES blend. The reported Tg for PES is 220-230 °C.

TABLE I

| Physical Properties for PPS/PES Blends | | | | | | |
|---|---|---|---|---|---|---|
| | Percentages | | | | | |
| Materials | A | B | C | D | E | F |
| Glass Fiber | 40 | 40 | 40 | 40 | - | 20 |
| PPS[1] | 60 | 30 | 40 | 50 | 60 | 30 |
| PES[1] | | 30 | 20 | 10 | | 30 |
| Mica | | | | | 40 | 20 |
| Tensile Properties | A | B[3] | C | D | E | F[3] |
| Break (psi) | 21,410 | - | 22,340 | 22,220 | 14,260 | - |
| Elongation (%) | 1.6 | - | 1.7 | 1.7 | 1.5 | - |
| Modulus (kpsi) | 2,220 | - | 2,250 | 2,050 | 2,150 | - |
| Flexural Properties | | | | | | |
| Break (psi) | 30,260 | - | 30.950 | 30,750 | 22,670 | - |
| Modulus (kpsi) | 1,830 | - | 1,760 | 1,820 | 1,660 | - |
| Notched Izod | | | | | | |
| (ft-lbs/in) | 1.1 | - | 1.2 | 1.2 | 0.6 | - |
| Heat Deflection Temperature (°C) | | | | | | |
| at 264 psi | 261 | - | 232 | 262 | 240 | - |
| Warpage[4] (in) | 0.017 | | 0.004 | 0.008 | 0.004 | |

1. Fortron 214B1, Polyphenylene Sulfide, Hoechst Celanese Corp.
2. Victrex 4100G, ICI, Wilkington, DE.
3. Compounding could not be completed.
4. Maximum deflection from flat for a 4 inch diameter x 1/8 inch thick disc

TABLE II

| Glass Transition Temperatures as Measured by DMTA | | | | | |
|---|---|---|---|---|---|
| Samples | A | C | D | E | G |
| | 40% GF<br>60% PPS | 40% GF<br>40% PPS<br>20% PES | 40 % GF<br>50% PPS<br>10% PES | 40% Mica<br>60% PPS | 75% PPS<br>25% PES |
| Glass Transition Temperature °C | 114.5 | 115.5<br>204 | 116<br>207 | 117 | 115.5<br>222 |
| Conditions: Frequency 1 Hz, nitrogen atmosphere, 5°C/minute | | | | | |

## Claims

1. A molding composition comprising (a) polyarylene sulfide, and (b) glass fiber, characterised in that the composition contains 10-20% by weight (based on the total composition) of polyether sulfone.

2. The molding composition of claim 1 characterised in that the polyarylene sulfide is polyphenylene sulfide.

3. The molding composition of claim 2 characterised in that the polyarylene sulfide is a copolymer containing a p-phenylene sulfide moiety and an m-phenylene sulfide moiety.

4. The molding composition of any of claims 1-3 characterised in that the polyarylene sulfide is the reaction product of an alkali metal sulfide, one or more dihalobenzenes and a trihalobenzene.

5. The molding composition of any of claims 1-4 wherein the polyarylene sulfide forms 40 to 50% by weight and the glass fiber forms 30-50% by weight (based on the total composition).

6. The molding composition of any of claims 1-4 consisting essentially of 50% by weight polyarylene sulfide, 40% by weight glass fiber and 10% by weight polyether sulfone.

7. The molding composition of any of claims 1-6 characterised in that the polyether sulfone is polyphenylene ether sulfone.

8. A process for producing a molded article which comprises subjecting a blend of (a) polyarylene sulfide, (b) glass fiber and (c) 10-20% by weight of the blend to a molding operation, and curing the blend.

9. A process for producing an electronic component which comprises forming or encapsulating a base component in a blend of (a) polyarylene sulfide, (b) glass fiber and (c) 10-20% by weight of the blend of polyether sulfone, and curing the blend.